# FASCICULE DE BREVET EUROPEEN

(11) **EP 1 922 960 B1**
(45) Date de publication et mention de la délivrance du brevet: **23.12.2009**
(21) Numéro de dépôt: 07356147.4
(22) Date de dépôt: 22.10.2007
(51) Int. Cl.: A47J 27/04, A47J 36/12, A47J 36/20, A47J 43/046

(54) **Couvercle à dégagement de vapeur contrôlé, et dispositif de cuisson, notamment appareil électroménager de préparation culinaire chauffant**
Deckel zum kontrollierten Dampfablassen und Kochvorrichtung, insbesondere für Haushaltsgerät zur Essenszubereitung durch Erhitzen
Lid with controlled steam release, and cooking device, in particular a heating kitchen appliance

(30) Priorité: 17.11.2006 FR 0610055; 13.03.2007 FR 0701791
(43) Date de publication de la demande: 21.05.2008
(73) Titulaire: SEB SA, 69130 Ecully (FR)
(72) Inventeur: Charles Patrick, 65290 Louey (FR); Noguez, Jean Michel, 65100 Lourdes (FR); Astegno, Jean Paul, 64420 Espoey (FR); Piret, Philippe, 78970 Mézières-sur-Seine (FR)
(74) Mandataire: Kiehl, Hubert

(56) Documents cités:
- EP-A- 0 275 547
- WO-A-2005/065503
- WO-A-2005/094648
- WO-A-2005/104917
- WO-A-2006/064306
- FR-A1- 2 774 274
- US-A- 2 510 196
- US-A- 4 917 262
- US-A- 5 065 889

## Description

La présente invention concerne le domaine technique des ustensiles de cuisson.

La présente invention concerne également le domaine technique des dispositifs de cuisson, comportant ou non des moyens de chauffe intégrés.

La présente invention concerne notamment, mais non exclusivement, les appareils électroménagers de préparation culinaire chauffants, comportant un outil de travail rotatif disposé dans une cuve prévue pour recevoir les aliments.

La réalisation de confitures à partir de fruits crus nécessite généralement un remuage du contenu de la cuve, pour favoriser la désagrégation des fruits et le mélange de la préparation. D'autres types de préparations peuvent également nécessiter un remuage, notamment des préparations à base de céréales ou de riz. Pour ces préparations, une enceinte de cuisson présentant une ouverture vers l'extérieur, et de préférence une ouverture assez importante vers l'extérieur, est préférable. En effet, un confinement de l'enceinte de cuisson tend à favoriser les phénomènes de moussage de la préparation.

La réalisation de jus de fruits à partir de fruits crus peut être effectuée en utilisant la vapeur pour extraire les jus des fruits. Les jus de fruits obtenus peuvent être utilisés pour la réalisation de gelées. Pour ces préparations, une enceinte de cuisson présentant une ouverture réduite vers l'extérieur, est préférable. En effet, un confinement de la vapeur est nécessaire pour faire éclater les fruits ; toutefois il est également nécessaire d'évacuer la surpression de vapeur.

Le document WO-2005/065503 décrit un dispositif de cuisson comprenant une cuve et un couvercle.

Un but de la présente invention est de proposer un couvercle à dégagement de vapeur contrôlé, qui permette d'obtenir sans manipulation particulière une enceinte de cuisson présentant un passage plus ou moins important vers l'extérieur, lorsque le couvercle est disposé sur le ou les autres éléments appartenant à ladite enceinte de cuisson.

Un autre but de la présente invention est de proposer un dispositif de cuisson, notamment un appareil électroménager de préparation culinaire, permettant de simplifier la réalisation de préparations nécessitant une enceinte de cuisson présentant un passage plus ou moins important vers l'extérieur.

Un autre but de la présente invention est de proposer un couvercle à dégagement de vapeur contrôlé, qui permette d'obtenir sans manipulation particulière une enceinte de cuisson présentant ou non un passage vers l'extérieur, lorsque le couvercle est disposé sur le ou les autres éléments appartenant à ladite enceinte de cuisson.

Un autre but de la présente invention est de proposer un dispositif de cuisson, notamment un appareil électroménager de préparation culinaire, permettant de simplifier la réalisation de préparations nécessitant une enceinte de cuisson présentant ou non un passage vers l'extérieur.

Les buts de l'invention sont atteints avec un couvercle à dégagement de vapeur contrôlé, comportant un corps principal présentant une ouverture et un corps secondaire mobile entre une position abaissée, dans laquelle le corps secondaire obture au moins partiellement l'ouverture, et une position relevée, dans laquelle le corps secondaire est écarté de l'ouverture, du fait que le corps secondaire est monté mobile en translation autour d'un noyau central issu du corps principal, et en ce que le corps secondaire présente des moyens d'actionnement inférieurs s'étendant en dessous du noyau central. Ces dispositions permettent d'obtenir un couvercle ménageant un passage plus ou moins important vers l'extérieur, selon la position du corps secondaire. Selon un mode de réalisation le corps secondaire peut fermer l'ouverture du corps principal. Si désiré, le corps secondaire et/ou le corps principal peuvent présenter un évent. En alternative, le corps secondaire peut être agencé de manière à pouvoir être soulevé par la pression régnant dans l'enceinte de cuisson. Selon un autre mode de réalisation le corps secondaire ménages au moins un évent avec le corps principal. De préférence la section de l'évent laissée libre lorsque le corps secondaire occupe la position abaissée est plus réduite que la section du passage vers l'extérieur dégagé par le corps secondaire en position relevée.

Avantageusement alors, pour faciliter la manipulation, le couvercle comporte un organe de préhension central monté sur le noyau central.

Les buts de l'invention sont atteints aussi avec un dispositif de cuisson, comportant une partie inférieure comprenant une cuve, et un couvercle comportant un corps principal présentant une ouverture et un corps secondaire mobile entre une position abaissée, dans laquelle le corps secondaire obture au moins partiellement l'ouverture, et une position relevée, dans laquelle le corps secondaire est écarté de l'ouverture, du fait que la partie inférieure repousse le corps secondaire vers la position relevée lorsque le couvercle repose sur la cuve. Le couvercle peut être repoussé directement par la cuve, ou par un élément disposé dans la cuve. Ces dispositions permettent d'obtenir une enceinte de cuisson présentant un passage vers l'extérieur lorsque le couvercle est en place sur la cuve. Selon une disposition avantageuse, le corps secondaire en position abaissée n'obture pas complètement l'ouverture et permet un dégagement de vapeur contrôlé.

Avantageusement, l'appareil comporte un récipient intermédiaire prévu pour être interposé entre le couvercle et la cuve, et le corps secondaire occupe la position abaissée lorsque le couvercle repose sur le récipient intermédiaire. Ces dispositions permettent d'adapter automatiquement la configuration du couvercle en fonction de la configuration du dispositif de cuisson.

Avantageusement alors, le récipient intermédiaire forme une passoire. Cette disposition permet de cuire à la vapeur et/ou de réaliser des jus de fruits. En alternative une passoire ou un support ménageant un passage avec le récipient intermédiaire peut notamment être disposé(e) dans le récipient intermédiaire, pour recevoir les aliments, les jus étant recueillis dans le récipient intermédiaire.

Avantageusement encore, la partie inférieure comprend un accessoire agencé dans la cuve, l'accessoire agencé dans la cuve repoussant le corps secondaire vers la position relevée lorsque le couvercle repose sur la cuve. Cette disposition permet de relier la configuration du couvercle à la présence de l'accessoire dans la cuve.

Avantageusement alors, en l'absence de l'accessoire dans la cuve, le corps secondaire occupe la position abaissée lorsque le couvercle repose sur la cuve. Cette disposition permet de relier la configuration du couvercle à l'absence de l'accessoire dans la cuve.

Avantageusement encore, l'accessoire est formé par un outil de travail rotatif. Le dispositif de cuisson peut par exemple être prévu pour être utilisé dans un four à micro-ondes, l'outil de travail rotatif étant prévu pour être entraîné par le plateau tournant du four à micro-ondes. En alternative, l'outil de travail rotatif peut être maintenu immobile dans l'enceinte de cuisson du four à micro-ondes, la cuve étant entraînée en rotation par le plateau tournant du four à micro-ondes. L'outil de travail rotatif reste mobile en rotation par rapport à la cuve dans laquelle sont disposés les aliments.

Avantageusement encore, la cuve présente un fond et une cheminée s'élevant à partir du fond, l'accessoire coiffant la cheminée. Cette disposition facilite la mise en place de l'accessoire dans la cuve.

Avantageusement alors, le récipient intermédiaire comporte une protubérance prévue pour coiffer la cheminée. Cette disposition facilite la mise en place du récipient intermédiaire dans la cuve.

Avantageusement encore, le couvercle comporte un corps principal présentant une ouverture et un corps secondaire mobile entre une position abaissée, dans laquelle le corps secondaire obture au moins partiellement l'ouverture, et une position relevée, dans laquelle le corps secondaire est écarté de l'ouverture, le corps secondaire étant monté mobile en translation autour d'un noyau central issu du corps principal, le corps secondaire présentant des moyens d'actionnement inférieurs s'étendant en dessous du noyau central. Avantageusement alors, le couvercle comporte un organe de préhension central monté sur le noyau central.

Les buts de l'invention sont atteints aussi avec un appareil électroménager de préparation culinaire, comportant un couvercle et une partie inférieure comprenant une cuve associée à des moyens de chauffe, un outil de travail rotatif agencé dans la cuve, et un dispositif d'entraînement de l'outil de travail rotatif, caractérisé en ce que la cuve et le couvercle forment un dispositif de cuisson dans lequel le couvercle comporte un corps principal présentant une ouverture et un corps secondaire mobile entre une position abaissée, dans laquelle le corps secondaire obture au moins partiellement l'ouverture, et une position relevée, dans laquelle le corps secondaire est écarté de l'ouverture, l'outil de travail rotatif agencé dans la cuve repoussant le corps secondaire vers la position relevée lorsque le couvercle repose sur la cuve. Ces dispositions permettent également de réaliser un appareil de cuisson autonome présentant une enceinte de cuisson à plusieurs configurations, avec une évacuation de vapeur adaptée aux utilisations de l'enceinte de cuisson, sans manipulation particulière du couvercle.

Avantageusement alors, en l'absence de l'outil de travail rotatif dans la cuve, le corps secondaire occupe la position abaissée lorsque le couvercle repose sur la cuve. Cette disposition permet de relier la configuration du couvercle à l'absence de l'accessoire dans la cuve.

Avantageusement encore, la cuve présente un fond et une cheminée s'élevant à partir du fond, l'outil de travail rotatif coiffant la cheminée. Cette disposition permet de simplifier la réalisation de la cuve et la réalisation des moyens d'entraînement de l'outil de travail rotatif.

Avantageusement encore, un récipient intermédiaire est prévu pour être interposé entre le couvercle et la cuve, le récipient intermédiaire comportant une protubérance prévue pour coiffer la cheminée de la cuve. Cette disposition permet d'éviter que la vapeur présente dans l'enceinte de cuisson ne pénètre dans les parties mécaniques de l'appareil par la cheminée prévue pour le passage de la transmission de l'outil de travail rotatif.

Avantageusement encore, le dispositif de cuisson peut comporter des moyens de chauffe, la cuve étant associée aux moyens de chauffe. Le dispositif de cuisson ne comporte alors pas nécessairement de moyens d'entraînement pour un outil de travail rotatif.

L'invention sera mieux comprise à l'étude de deux exemples de réalisation, pris à titre nullement limitatif, illustrés dans les figures annexées, dans lesquelles :
- la figure 1 est une vue en éclaté d'un premier exemple de réalisation d'un appareil électroménager de préparation culinaire comportant un couvercle à dégagement de vapeur contrôlé selon l'invention, et formant un dispositif de cuisson selon l'invention,
- la figure 2 est une vue en perspective plongeante de l'appareil électroménager de préparation culinaire illustré à la figure 1, présentant une configuration comportant une cuve, un outil de travail rotatif et le couvercle précité,
- la figure 3 est une vue en coupe verticale de l'appareil électroménager de préparation culinaire représenté à la figure 2,
- la figure 4 est une vue en perspective plongeante de l'appareil électroménager de préparation culinaire illustré à la figure 1, présentant une configuration comportant une cuve, un récipient intermédiaire et le couvercle précité,
- la figure 5 est une vue en coupe verticale de l'appareil électroménager de préparation culinaire représenté à la figure 4,
- la figure 6 est une vue en perspective plongeante d'un deuxième exemple de réalisation d'un appareil électroménager de préparation culinaire comportant un couvercle à dégagement de vapeur contrôlé selon l'invention, et formant un dispositif de cuisson selon l'invention, cet appareil présentant une configuration comportant une cuve, un récipient intermédiaire et le couvercle précité,
- la figure 7 est une vue en coupe verticale de l'appareil électroménager de préparation culinaire représenté à la figure 6.

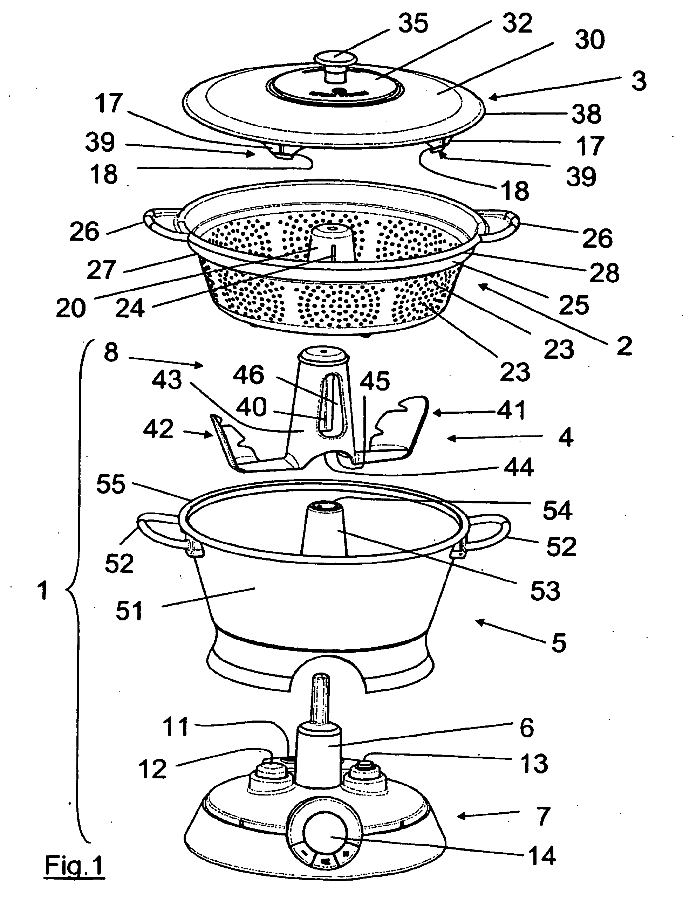

La figure 1 illustre un exemple de réalisation d'un appareil électroménager de préparation culinaire comportant une partie inférieure 1, un récipient intermédiaire 2, et un couvercle 3. La partie inférieure 1 comprend un outil de travail rotatif 4. La partie inférieure 1 comprend une cuve 5. L'outil de travail rotatif 4 est prévu pour être agencé dans la cuve 5. La partie inférieure 1 comprend un dispositif d'entraînement 6 de l'outil de travail rotatif 4. Le dispositif d'entraînement 6 est logé dans un socle 7. La cuve 5 repose sur le socle 7.

La cuve 5 présente un fond 50 et une paroi latérale 51. La paroi latérale 51 est avantageusement tronconique. La cuve 5 présente des organes de préhension 52 disposés sur la paroi latérale 51. La cuve 5 présente aussi une cheminée 53 s'élevant à partir du fond 50. La cheminée 53 est avantageusement tronconique. Un palier 54 est agencé en partie supérieure de la cheminée 53. Le palier 54 permet de faciliter la rotation de l'outil de travail rotatif 4. Le palier 54 est avantageusement clipsé à l'intérieur du sommet de la cheminée 53.

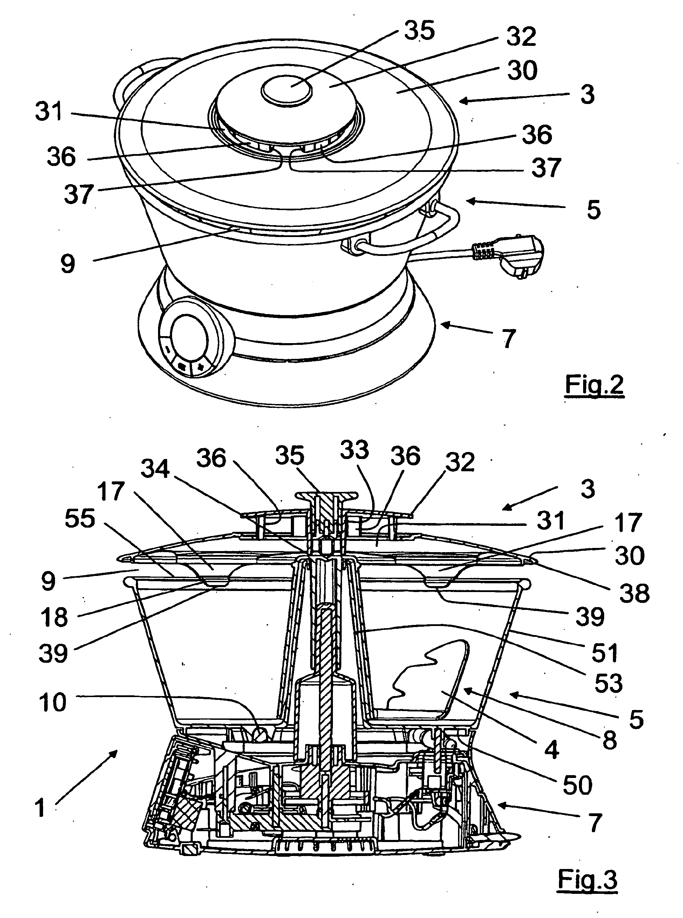

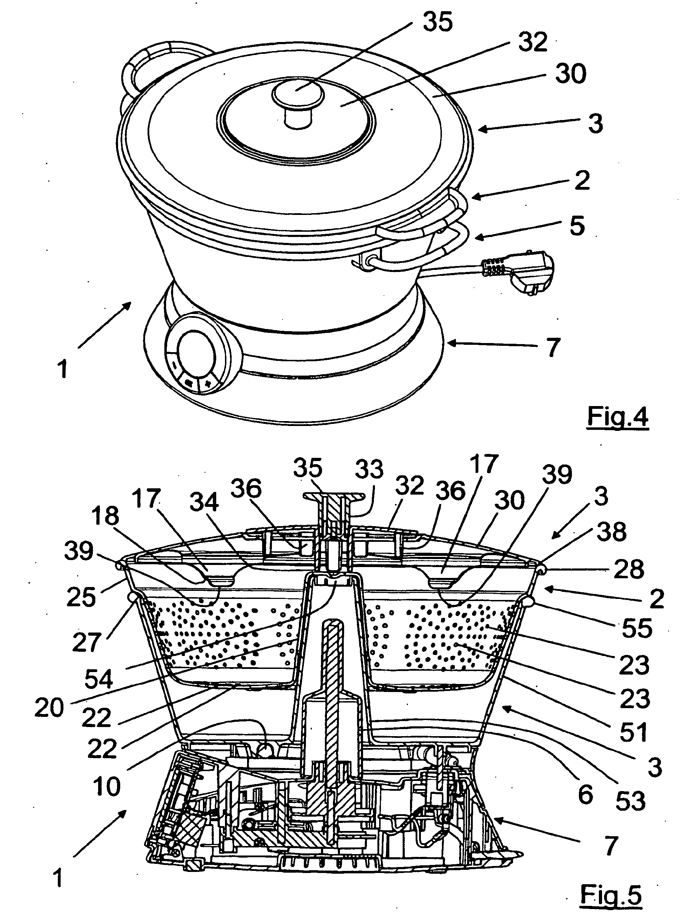

La cuve 5 est associée à des moyens de chauffe 10. Selon le mode de réalisation visible sur les figures 3 et 5, les moyens de chauffe 10 sont formés par un élément chauffant blindé disposé sous le fond 50 de la cuve 5.

Les moyens de chauffe 10 comportent des connecteurs coopérant avec des douilles d'alimentation électrique 11 agencées dans le socle 7. Le socle 7 comporte des moyens de sécurité thermique comportant un palpeur 12 et des moyens de régulation comportant un autre palpeur 13, ainsi que des moyens de commande 14 prévus pour piloter l'appareil.

Le couvercle 3 peut reposer sur la cuve 5, tel que représenté sur les figures 2 et 3. Dans cette configuration prévue notamment pour la réalisation de confitures, l'outil de travail rotatif 4 est agencé dans la cuve 5. Plus particulièrement, l'outil de travail rotatif 4 coiffe la cheminée 53, tel que montré sur la figure 3.

L'outil de travail rotatif 4 comporte un organe d'entraînement 40, un organe de travail 41, un autre organe de travail 42, et un moyeu 43. L'organe de travail 41 et l'autre organe de travail 42 sont issus du moyeu 43. Le moyeu 43 porte l'organe d'entraînement 40. Le moyeu 43 est tubulaire et présente deux échancrures inférieures 44, 45 opposées. Le moyeu 43 présente deux découpes latérales 46 permettant d'éviter le soulèvement de l'outil de travail rotatif 4 par les aliments, notamment par les aliments liquides.

Le récipient intermédiaire 2 est prévu pour reposer sur la cuve 5. Le récipient intermédiaire 2 est prévu pour être interposé entre le couvercle 3 et la cuve 5, tel que représenté aux figures 4 et 5. Dans cette configuration prévue notamment pour la réalisation de jus de fruits, l'outil de travail rotatif 4 est retiré de la cuve 5. Le récipient intermédiaire 2 comporte une protubérance 20 prévue pour coiffer la cheminée 53 de la cuve 5.

La protubérance 20 est avantageusement tronconique. Tel que représenté sur la figure 5, la protubérance 20 repose sur le sommet de la cheminée 53.

Le récipient intermédiaire 2 forme une passoire. A cet effet, le récipient intermédiaire 2 comporte des ouvertures inférieures 22. Le récipient intermédiaire 2 comporte également des ouvertures latérales extérieures 23. Le récipient intermédiaire 2 comporte aussi des ouvertures latérales intérieures 24 ménagées sur une paroi latérale de la protubérance 20.

Le récipient intermédiaire 2 comporte une couronne supérieure 25 dépourvue de perforations. Des organes de préhension 26 sont issus de la couronne supérieure 25. La couronne supérieure 25 forme un décrochement 27 par rapport à la paroi extérieure présentant les ouvertures latérales extérieures 23. Le décrochement 27 est prévu pour reposer sur la cuve 5. A cet effet la cuve 5 présente un bord supérieur 55 recourbé. La couronne supérieure 25 du récipient intermédiaire 2 comporte un bord supérieur 28. Le diamètre du bord supérieur 28 du récipient intermédiaire 2 est supérieur au diamètre du bord supérieur 55 de la cuve 5.

Le couvercle 3 forme un couvercle à dégagement de vapeur contrôlé. Le couvercle 3 comporte un corps principal 30.

Le corps principal 30 présente une ouverture 31, mieux visible sur la figure 3. Le couvercle 3 comporte un corps secondaire 32 mobile entre une position abaissée, illustrée aux figures 1, 4 et 5, dans laquelle le corps secondaire 32 obture l'ouverture 31, et une position relevée, illustrée aux figures 2 et 3, dans laquelle le corps secondaire 32 est écarté de l'ouverture 31.

Le corps secondaire 32 est monté mobile en translation autour d'un noyau central 33 issu du corps principal 30, tel que visible sur les figures 3 et 5. Le corps secondaire 32 présente des moyens d'actionnement inférieurs 34 s'étendant en dessous du noyau central 33. Le couvercle 5 comporte un organe de préhension central 35 monté sur le noyau central 33. L'organe de préhension central 35 est par exemple vissé sur le noyau central 33. Le corps secondaire 32 présente une série de languettes inférieures 36 engagées dans des passages 37 du corps principal 30.

Le couvercle 3 comporte des moyens d'appui périphériques 38 agencés sous le corps principal 30. Les moyens d'appui périphériques 38 sont annulaires. Les moyens d'appui périphériques 38 sont prévus pour reposer sur le récipient intermédiaire 2. Plus particulièrement, les moyens d'appui périphériques 38 reposent sur le bord supérieur 28 du récipient intermédiaire 2, tel que visible sur la figure 5.

Le couvercle 3 comporte des moyens d'appui inférieurs 39 agencés sous le corps principal 30, les moyens d'appui inférieurs 39 ménageant un passage latéral 9 sous le corps principal 30 du couvercle 3. Le passage latéral 9 met en communication l'espace disposé sous le corps principal 30 avec l'espace extérieur disposé autour du corps principal 30, notamment autour et en dessous du corps principal 30. Les moyens d'appui périphériques 38 sont agencés sous le corps principal 30 à l'extérieur des moyens d'appui inférieurs 39. Ainsi, les moyens d'appui périphériques 38 entourent les moyens d'appui inférieurs 39. Toutefois, les moyens d'appui inférieurs 39 sont disposés à un niveau inférieur par rapport aux moyens d'appui périphériques 38. Plus particulièrement, les moyens d'appui inférieurs 39 sont formés par des languettes 17 présentant une zone d'appui 18. La zone d'appui 18 est prévue pour reposer sur le bord supérieur 55 de la cuve 5, tel que visible sur la figure 3. Le passage latéral 9 est annulaire. Le couvercle 3 repose sur la cuve 5 par l'intermédiaire des languettes 17 issues du corps principal 30.

L'appareil électroménager de préparation culinaire illustré à la figure 1 forme un dispositif de cuisson comportant des moyens de chauffe 10.

Selon la configuration illustrée aux figures 2 et 3, le dispositif de cuisson comporte la partie inférieure 1 comprenant la cuve 5, et le couvercle 3 comportant le corps principal 30 présentant l'ouverture 31 et le corps secondaire 32 mobile entre une position abaissée, dans laquelle le corps secondaire 32 obture l'ouverture 31, et une position relevée, dans laquelle le corps secondaire 32 est écarté de l'ouverture 31, la partie inférieure 1 repoussant le corps secondaire 32 vers la position relevée lorsque le couvercle 3 repose sur la cuve 5.

Selon la configuration illustrée aux figures 4 et 5, le dispositif de cuisson comporte la cuve 5, le couvercle 3 et le récipient intermédiaire 2 prévu pour être interposé entre le couvercle 3 et la cuve 5. Le couvercle 3 comporte le corps principal 30, les moyens d'appui périphériques 38 agencés sous le corps principal 30, les moyens d'appui inférieurs 39 agencés sous le corps principal 30, les moyens d'appui inférieurs 39 ménageant le passage latéral 9 sous le corps principal 30, les moyens d'appui périphériques 38 étant agencés sous le corps principal 30 à l'extérieur des moyens d'appui inférieurs 39.

Tel que visible sur les figures 2 et 3, les moyens d'appui inférieurs 39 reposant sur la cuve 5 ménagent le passage latéral 9 entre la cuve 5 et le corps principal 30 du couvercle 3. Le corps secondaire 32 occupe la position relevée lorsque le couvercle 3 repose sur la cuve 5.

Tel que visible sur les figures 4 et 5, les moyens d'appui inférieurs 39 s'étendent dans le récipient intermédiaire 2 lorsque les moyens d'appui périphériques 38 reposent sur le récipient intermédiaire 2. Le corps secondaire 32 occupe la position abaissée lorsque le couvercle 3 repose sur le récipient intermédiaire 2. Si désiré le corps secondaire 32 peut être agencé de manière à pouvoir être soulevé par la pression régnant dans l'enceinte de cuisson.

Plus particulièrement, la partie inférieure 1 comprend un accessoire 8 agencé dans la cuve 5. L'accessoire 8 agencé dans la cuve 5 repousse le corps secondaire 32 vers la position relevée lorsque le couvercle repose sur la cuve 5. L'accessoire 8 agencé dans la cuve 5 coiffe la cheminée 53.

En l'absence de l'accessoire 8 dans la cuve 5, le corps secondaire 32 occupe la position abaissée lorsque le couvercle 3 repose sur la cuve 5.

Selon le mode de réalisation préféré illustré aux figures 1 à 5, l'accessoire 8 est formé par l'outil de travail rotatif 4. Ainsi l'outil de travail rotatif 4 agencé dans la cuve 5 repousse le corps secondaire 32 vers la position relevée lorsque le couvercle 3 repose sur la cuve 5. De plus, en l'absence de l'outil de travail rotatif 4 dans la cuve 5, le corps secondaire 32 occupe la position abaissée lorsque le couvercle 3 repose sur la cuve 5.

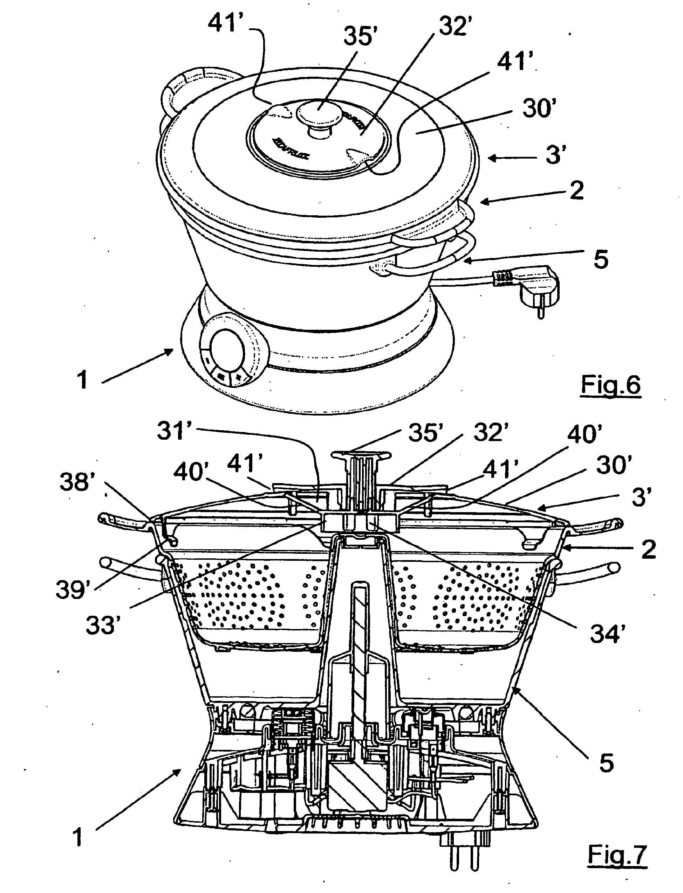

L'appareil électroménager de préparation culinaire illustré sur les figures 6 et 7 comporte la partie inférieure 1 et le récipient intermédiaire 2 de l'appareil électroménager de préparation culinaire illustré sur les figures 1 à 5, ainsi qu'un couvercle 3'. Le couvercle 3 et le couvercle 3' permettent un dégagement de vapeur contrôlé dans la configuration de cuisson utilisant l'accessoire 8 agencé dans la cuve 5, dans laquelle le couvercle 3 ; 3' repose sur la cuve 5.

Le couvercle 3' diffère du couvercle 3 en ce qu'il permet aussi un dégagement de vapeur contrôlé dans la configuration de cuisson utilisant le récipient intermédiaire 2, dans laquelle le couvercle 3' repose sur le récipient intermédiaire 2 disposé sur la cuve 5. A cet effet le couvercle 3' à dégagement de vapeur contrôlé comporte un corps principal 30' présentant une ouverture 31' et un corps secondaire 32' mobile entre une position abaissée, dans laquelle le corps secondaire 32' obture partiellement l'ouverture 31', et une position relevée, dans laquelle le corps secondaire 32' est écarté de l'ouverture 31'. Le corps secondaire 32' est monté mobile en translation autour d'un noyau central 33' issu du corps principal 30'. Le corps secondaire 32' présente des moyens d'actionnement inférieurs 34' s'étendant en dessous du noyau central 33'. Le couvercle 3' comporte un organe de préhension central 35' monté sur le noyau central 33'. Le noyau central 33' est relié à la partie périphérique du corps principal 30' par des bras 40'.

Le corps secondaire 32' forme deux évents 41' permettant un dégagement de vapeur contrôlé dans la configuration de cuisson utilisant le récipient intermédiaire 2, illustrée aux figures 6 et 7. Les évents 41' sont orientés vers la périphérie du corps secondaire 32', de manière à éviter des jets de vapeur en direction de l'organe de préhension central 35'.

Le couvercle 3' comporte des moyens d'appui périphériques 38' comparables aux moyens d'appui périphériques 38 du couvercle 3. Le couvercle 3' comporte des moyens d'appui inférieurs 39' comparables aux moyens d'appui inférieurs 39 du couvercle 3.

Le couvercle 3' appartient à un dispositif de cuisson comportant le couvercle 3', le récipient intermédiaire 2, et la partie inférieure 1 comprenant la cuve 5.

Ainsi la cuve 5, le couvercle 3 ; 3' et le récipient intermédiaire 2 de l'appareil électroménager de préparation culinaire forment un dispositif de cuisson dans lequel le couvercle 3 ; 3' comporte le corps principal 30 ; 30' et les moyens d'appui périphériques 38 ; 38' agencés sous le corps principal 30 ; 30', les moyens d'appui inférieurs 39 ; 39' agencés sous le corps principal 30 ; 30', les moyens d'appui inférieurs 39 ; 39' ménageant le passage latéral 9 sous le corps principal 30 ; 30', les moyens d'appui périphériques 38 ; 38' étant agencés sous le corps principal 30 ; 30' à l'extérieur des moyens d'appui inférieurs 39 ; 39', les moyens d'appui inférieurs 39 ; 39' reposant sur la cuve 5 ménageant le passage latéral 9 entre la cuve 5 et le corps principal 30 ; 30' du couvercle 3 ; 3', les moyens d'appui inférieurs 39 ; 39' s'étendant dans le récipient intermédiaire 2 lorsque les moyens d'appui périphériques 38 ; 38' reposent sur le récipient intermédiaire 2, le récipient intermédiaire 2 formant avantageusement une passoire.

Ainsi la cuve 5, l'outil de travail rotatif 4 et le couvercle 3 ; 3' de l'appareil électroménager de préparation culinaire forment un dispositif de cuisson dans lequel le couvercle 3 ; 3' comporte un corps principal 30 ; 30' présentant une ouverture 31 ; 31' et un corps secondaire 32 ; 32' mobile entre une position abaissée, dans laquelle le corps secondaire 32 ; 32' obture au moins partiellement l'ouverture 31 ; 31', et une position relevée, dans laquelle le corps secondaire 32 ; 32' est écarté de l'ouverture 31 ; 31', et dans lequel l'outil de travail rotatif 4 agencé dans la cuve 5 repousse le corps secondaire 32 ; 32' vers la position relevée lorsque le couvercle 3 ; 3' repose sur la cuve 5. Avantageusement le récipient intermédiaire 2 est prévu pour être interposé entre le couvercle 3 ; 3' et la cuve 5, le corps secondaire 32 ; 32' occupant la position abaissée lorsque le couvercle 3 ; 3' repose sur le récipient intermédiaire 2.

La présente invention permet d'obtenir un appareil électroménager de préparation culinaire et un dispositif de cuisson présentant sans intervention particulière de l'utilisateur une première configuration utilisant l'outil de travail rotatif 4 ou l'accessoire 8, dans laquelle l'enceinte de cuisson formée par la cuve 5 et le couvercle 3 ; 3' présente le passage latéral 9 dégagé et l'ouverture 31 ; 31' dégagée, et une deuxième configuration n'utilisant pas l'outil de travail rotatif 4 ou l'accessoire 8, dans laquelle l'enceinte de cuisson formée par la cuve 5, le récipient intermédiaire 2 et le couvercle 3 ne présente pas le passage latéral 9 vers l'extérieur ni l'ouverture 31 dégagée, et dans laquelle l'enceinte de cuisson formée par la cuve 5, le récipient intermédiaire 2 et le couvercle 3' présente un dégagement de vapeur contrôlé par les évents 41'.

Dans la première configuration illustrée sur la figure 3, le couvercle 3 reposant sur les moyens d'appui inférieurs 39 dégage le passage latéral 9 et l'outil de travail rotatif 4 ou l'accessoire 8 disposé sur la cheminée 53 de la cuve 5 repousse le corps secondaire 32 en position relevée, dégageant l'ouverture 31.

Dans la deuxième configuration illustrée sur la figure 5, le couvercle 3 reposant sur les moyens d'appui périphériques 38 obstrue le passage latéral 9 et le récipient intermédiaire 2 disposé sur la cuve 5 laisse le corps secondaire 32 en position abaissée, obstruant l'ouverture 31.

Dans la deuxième configuration illustrée sur la figure 7, le couvercle 3' reposant sur les moyens d'appui périphériques 38' obstrue le passage latéral et le récipient intermédiaire 2 disposé sur la cuve 5 laisse le corps secondaire 32' en position abaissée, ménageant un passage par les évents 41'.

A titre de variante, le couvercle 3 ; 3' à dégagement de vapeur contrôlé selon l'invention pourrait comporter seulement le passage latéral 9 ou seulement l'ouverture 31 ; 31'.

A titre de variante, le socle 7 pourrait être dépourvu de dispositif d'entraînement 6.

A titre de variante, le socle 7 pourrait être solidaire de la cuve 5.

A titre de variante, le dispositif de cuisson selon l'invention pourrait être dépourvu de moyens de chauffe 10.

A titre de variante, le dispositif de cuisson selon l'invention pourrait comporter un accessoire 8 statique.

A titre de variante, le dispositif de cuisson selon l'invention pourrait être dépourvu d'accessoire 8.

A titre de variante, le dispositif de cuisson selon l'invention pourrait comporter seulement le passage latéral 9 ou seulement l'ouverture 31.

A titre de variante, les moyens de chauffe 10 pourraient être solidaires du socle 7, la cuve 5 étant associée aux moyens de chauffe 10 lorsque ladite cuve repose sur le socle 7.

A titre de variante, l'appareil électroménager de préparation culinaire selon l'invention pourrait comporter seulement le passage latéral 9 ou seulement l'ouverture 31.

A titre de variante, l'appareil pourrait comporter un récipient récupérateur à jus disposé en dessous du récipient intermédiaire 2 formant passoire. Le récipient récupérateur à jus peut notamment être disposé dans la cuve 5 ou reposer sur le bord supérieur 55 de la cuve 5. Alors, en configuration extracteur de jus ou cuiseur vapeur, les aliments sont disposés dans le récipient intermédiaire 2 formant passoire, et les jus sont recueillis dans le récipient récupérateur à jus.

A titre de variante, l'appareil pourrait comporter dans le récipient intermédiaire 2 un élément prévu pour supporter les aliments à cuire à la vapeur, tel qu'un support à fond perforé, un récipient à fond perforé, une passoire, ou un support ménageant un passage avec la paroi interne du récipient intermédiaire 2, ce support présentant alors de préférence une face supérieure convexe permettant l'écoulement des jus vers ledit passage. La partie inférieure du récipient intermédiaire 2 utilisé avec ledit élément prévu pour supporter les aliments à cuire à la vapeur est de préférence dépourvue d'ouvertures. Alors, en configuration extracteur de jus ou cuiseur vapeur, les aliments sont disposés dans ledit élément prévu pour supporter les aliments à cuire à la vapeur, et les jus sont recueillis dans le récipient intermédiaire 2.

A titre de variante, les évents 41' pourraient être ménagés sur le corps principal 30 ; 30' ou sur le corps secondaire 32 ; 32'.

A titre de variante, le couvercle 3' peut comporter au moins un évent 41'.

A titre de variante, les moyens d'appui périphériques 38 du couvercle 3 ; 3' pourraient ménager un passage entre le corps principal 30 ; 30' et le récipient intermédiaire 2, la section dudit passage étant différente de la section du passage 9 formé lorsque le couvercle 3 ; 3' repose sur les moyens d'appui inférieurs 39.

La présente invention n'est nullement limitée aux exemples de réalisation décrits et à leurs variantes, mais englobe de nombreuses modifications dans le cadre des revendications.

## Revendications

1. Couvercle (3 ; 3') à dégagement de vapeur contrôlé, comportant un corps principal (30 ; 30') présentant une ouverture (31 ; 31') et un corps secondaire (32 ; 32') mobile entre une position abaissée, dans laquelle le corps secondaire (32 ; 32') obture au moins partiellement l'ouverture (31 ; 31'), et une position relevée, dans laquelle le corps secondaire (32 ; 32') est écarté de l'ouverture (31 ; 31'), **caractérisé en ce que** le corps secondaire (32 ; 32') est monté mobile en translation autour d'un noyau central (33 ; 33') issu du corps principal (30 ; 30'), et **en ce que** le corps secondaire (32 ; 32') présente des moyens d'actionnement inférieurs (34 ; 34') s'étendant en dessous du noyau central (33 ; 33').

2. Couvercle (3; 3') à dégagement de vapeur contrôlé selon la revendication 1, **caractérisé en ce qu'**il comporte un organe de préhension central (35 ; 35') monté sur le noyau central (33 ; 33').

3. Dispositif de cuisson, comportant une partie inférieure (1) comprenant une cuve (5), et un couvercle (3 ; 3') comportant un corps principal (30 ; 30') présentant une ouverture (31 ; 31') et un corps secondaire (32 ; 32') mobile entre une position abaissée, dans laquelle le corps secondaire (32; 32') obture au moins partiellement l'ouverture (31 ; 31'), et une position relevée, dans laquelle le corps secondaire (32 ; 32') est écarté de l'ouverture (31 ; 31'), **caractérisé en ce que** la partie inférieure (1) repousse le corps secondaire (32 ; 32') vers la position relevée lorsque le couvercle (3 ; 3') repose sur la cuve (5).

4. Dispositif de cuisson selon la revendication 3, **caractérisé en ce qu'**un récipient intermédiaire (2) est prévu pour être interposé entre le couvercle (3 ; 3') et la cuve (5), et **en ce que** le corps secondaire (32 ; 32') occupe la position abaissée lorsque le couvercle (3 ; 3') repose sur le récipient intermédiaire (2).

5. Dispositif de cuisson selon la revendication 4, **caractérisé en ce que** le récipient intermédiaire (2) forme une passoire.

6. Dispositif de cuisson selon l'une des revendications 3 à 5, **caractérisé en ce que** la partie inférieure (1) comprend un accessoire (8) agencé dans la cuve (5), et **en ce que** l'accessoire (8) agencé dans la cuve (5) repousse le corps secondaire (32 ; 32') vers la position relevée lorsque le couvercle (3 ; 3') repose sur la cuve (5).

7. Dispositif de cuisson selon la revendication 6, **caractérisé en ce qu'**en l'absence de l'accessoire (8) dans la cuve (5), le corps secondaire (32 ; 32') occupe la position abaissée lorsque le couvercle (3 ; 3') repose sur la cuve (5).

8. Dispositif de cuisson selon l'une des revendications 6 ou 7, **caractérisé en ce que** l'accessoire (8) est formé par un outil de travail rotatif (4).

9. Dispositif de cuisson selon l'une des revendications 6 à 8, **caractérisé en ce que** la cuve (5) présente un fond (50) et une cheminée (53) s'élevant à partir du fond (50), et **en ce que** l'accessoire (8) coiffe la cheminée (53).

10. Dispositif de cuisson selon l'une des revendications 4 ou 5 et la revendication 9, **caractérisé en ce que**l le récipient intermédiaire (2) comporte une protubérance (20) prévue pour coiffer la cheminée (53).

11. Dispositif de cuisson selon l'une des revendications 3 à 10, **caractérisé en ce que** le couvercle (3 ; 3') est conforme à l'une des revendications 1 ou 2.

12. Dispositif de cuisson selon l'une des revendications 3 à 11, **caractérisé en ce qu'**il comporte des moyens de chauffe (10) et **en ce que** la cuve (5) est associée aux moyens de chauffe (10).

13. Appareil électroménager de préparation culinaire, comportant un dispositif de cuisson selon l'une des revendications 3 ou 4, un outil de travail rotatif (4) agencé dans la cuve (5), et un dispositif d'entraînement (6) de l'outil de travail rotatif (4), la cuve (5) étant associée à des moyens de chauffe (10) l'outil de travail rotatif (4) agencé dans la cuve (5) repoussant le corps secondaire (32 ; 32') vers la position relevée lorsque le couvercle (3 ; 3') repose sur la cuve (5).

14. Appareil électroménager de préparation culinaire selon la revendication 13, **caractérisé en ce qu'**en l'absence de l'outil de travail rotatif (4) dans la cuve (5), le corps secondaire (32 ; 32') occupe la position abaissée lorsque le couvercle (3 ; 3') repose sur la cuve (5).

15. appareil électroménager de préparation culinaire selon l'une des revendications 13 ou 14, **caractérisé en ce que** la cuve (5) présente un fond (50) et une cheminée (53) s'élevant à partir du fond (50) et **en ce que** l'outil de travail rotatif (4) coiffe la cheminée (53).

16. Appareil électroménager de préparation culinaire selon la revendication 15, **caractérisé en ce qu'**il comporte un récipient intermédiaire (2) prévu pour être interposé entre le couvercle (3 ; 3') et la cuve (5), et **en ce que** le récipient intermédiaire (2) comporte une protubérance (20) prévue pour coiffer la cheminée (53) de la cuve (5).

## Claims

1. Lid (3; 3') for the controlled release of steam, comprising a main body (30; 30') having an opening (31; 31') and a secondary body (32; 32') mobile between a lowered position, wherein the secondary body (32; 32') seals at least partially the opening (31; 31'), and a raised position, wherein the secondary body (32; 32') is separated from the opening (31; 31'), **characterised in that** the secondary body (32; 32') is mounted movable in translation around a central core (33; 33') coming from the main body (30; 30'), and **in that** the secondary body (32; 32') has lower means for actuating (34; 34') extending below the central core (33; 33').

2. Lid (3; 3') for the controlled release of steam according to claim 1, **characterised in that** it comprises a central grasping member (35; 35') mounted on the central core (33; 33').

3. Cooking device, comprising a lower portion (1) comprising a vat (5), and a lid (3; 3') comprising a main body (30; 30') having an opening (31; 31') and a secondary body (32; 32') mobile between a lowered position, wherein the secondary body (32; 32') seals at least partially the opening (31; 31'), and a raised position, wherein the secondary body (32; 32') is separated from the opening (31; 31'), **characterised in that** the lower portion (1) pushes back the secondary body (32; 32') towards the raised position when the lid (3; 3') is resting on the vat (5).

4. Cooking device according to claim 3, **characterised in that** an intermediary vessel (2) is provided to be interposed between the lid (3; 3') and the vat (5), and **in that** the secondary body (32; 32') occupies the lowered position when the lid (3; 3') is resting on the intermediary vessel (2).

5. Cooking device according to claim 4, **characterised in that** the intermediary vessel (2) forms a strainer.

6. Cooking device according to one of claims 3 to 5, **characterised in that** the lower - portion (1) comprises an accessory (8) arranged in the vat (5), and **in that** the accessory (8) arranged in the vat (5) pushes back the secondary body (32; 32') towards the raised position when the lid (3; 3') is resting on the vat (5).

7. Cooking device according to claim 6, **characterised in that** in the absence of the accessory (8) in the vat (5), the secondary body (32; 32') occupies the lowered position when the lid (3; 3') is resting on the vat (5).

8. Cooking device according to one of claims 6 or 7, **characterised in that** the accessory (8) is formed by a rotary working tool (4).

9. Cooking device according to one of claims 6 to 8, **characterised in that** the vat (5) has a bottom (50) and a chimney (53) rising from the bottom (50), and **in that** the accessory (8) covers the chimney (53).

10. Cooking device according to one of claims 4 or 5 and claim 9, **characterised in that** the intermediary vessel (2) comprises a protuberance (20) provided to cover the chimney (53).

11. Cooking device according to one of claims 3 to 10, **characterised in that** the lid (3; 3') complies with one of claims 1 or 2.

12. Cooking device according to one of claims 3 to 11, **characterised in that** it comprises means for heating (10) and **in that** the vat (5) is associated with the means for heating (10).

13. Electric household appliance for food preparation, comprising a device for cooking according to one of claims 3 or 4, a rotary working tool (4) arranged in the vat (5), and a device for driving (6) the rotary working tool (4), the vat (5) being associated with means for heating (10), the rotary working tool (4) arranged in the vat (5) pushing back the secondary body (32; 32') towards the raised position when the lid (3; 3') is resting on the vat (5).

14. Electric household appliance for food preparation according to claim 13, **characterised in that** in the absence of the rotary working tool (4) in the vat (5), the secondary body (32; 32') occupies the lowered position when the lid (3; 3') is resting on the vat (5).

15. Electric household appliance for food preparation according to one of claims 13 or 14, **characterised in that** the vat (5) has a bottom (50) and a chimney (53) rising from the bottom (50) and **in that** the rotary working tool (4) covers the chimney (53).

16. Electric household appliance for food preparation according to claim 15, **characterised in that** it comprises an intermediary vessel (2) provided to be interposed between the lid (3; 3') and the vat (5), and **in that** the intermediary vessel (2) comprises a protuberance (20) provided to cover the chimney (53) of the vat (5).

## Patentansprüche

1. Deckel (3; 3') mit kontrolliertem Dampfablass, umfassend einen Hauptkörper (30; 30'), der eine Öffnung (31; 31') aufweist, und einen Nebenkörper (32; 32'), der zwischen einer abgesenkten Position, in welcher der Nebenkörper (32; 32') die Öffnung (31; 31') mindestens teilweise verschließt, und einer angehobenen Position, in welcher der Nebenkörper (32; 32') von der Öffnung (31; 31') entfernt ist, beweglich ist, **dadurch gekennzeichnet, dass** der Nebenkörper (32; 32') um einen Mittelkern (33; 33'), der aus dem Hauptkörper (30; 30') hervorgeht, in Parallelverschiebung beweglich angebracht ist, und dass der Nebenkörper (32; 32') untere Betätigungsmittel (34; 34') aufweist, die sich unterhalb des Mittelkerns (33; 33') erstrecken.

2. Deckel (3; 3') mit kontrolliertem Dampfablass nach Anspruch 1, **dadurch gekennzeichnet, dass** er ein mittleres Greiforgan (35; 35') umfasst, das auf dem Mittelkern (33; 33') angebracht ist.

3. Kochvorrichtung, umfassend einen unteren Teil (1), der ein Behälter (5) umfasst, und einen Deckel (3; 3'), der einen Hauptkörper (30; 30') umfasst, der eine Öffnung (31; 31') aufweist, und einen Nebenkörper (32; 32'), der zwischen einer abgesenkten Position, in welcher der Nebenkörper (32; 32') die Öffnung (31; 31') mindestens teilweise verschließt, und einer angehobenen Position, in welcher der Nebenkörper (32; 32') von der Öffnung (31; 31') entfernt ist, beweglich ist, **dadurch gekennzeichnet, dass** der untere Teil (1) den Nebenkörper (32; 32') in die angehobene Position zurückschiebt, wenn der Deckel (3; 3') auf dem Behälter (5) liegt.

4. Kochvorrichtung nach Anspruch 3, **dadurch gekennzeichnet, dass** ein Zwischenbehälter (2) bereitgestellt wird, um zwischen dem Deckel (3; 3') und dem Behälter (5) eingesetzt zu werden, und dass der Nebenkörper (32; 32') die abgesenkte Position einnimmt, wenn der Deckel (3; 3') auf dem Zwischenbehälter (2) liegt.

5. Kochvorrichtung nach Anspruch 4, **dadurch gekennzeichnet, dass** der Zwischenbehälter (2) ein Sieb bildet.

6. Kochvorrichtung nach einem der Ansprüche 3 bis 5, **dadurch gekennzeichnet, dass** der untere Teil (1) ein Zubehörteil (8) umfasst, das in dem Behälter (5) angeordnet ist, und dass das in dem Behälter (5) angeordnete Zubehörteil (8) den Nebenkörper (32; 32') in die angehobene Position zurückschiebt, wenn der Deckel (3; 3') auf dem Behälter (5) liegt.

7. Kochvorrichtung nach Anspruch 6, **dadurch gekennzeichnet, dass** wenn das Zubehörteil (8) nicht in dem Behälter (5) vorhanden ist, der Nebenkörper (32; 32') die abgesenkte Position einnimmt, wenn der Deckel (3; 3') auf dem Behälter (5) aufliegt.

8. Kochvorrichtung nach einem der Ansprüche 6 oder 7, **dadurch gekennzeichnet, dass** das Zubehörteil (8) durch ein drehbares Arbeitsgerät (4) gebildet wird.

9. Kochvorrichtung nach einem der Ansprüche 6 bis 8, **dadurch gekennzeichnet, dass** der Behälter (5) einen Boden (50) und einen sich vom Boden (50) aus erhebenden Abzug (53) aufweist, und dass das Zubehörteil (8) auf den Abzug (53) aufgesetzt wird.

10. Kochvorrichtung nach einem der Ansprüche 4 oder 5 und Anspruch 9, **dadurch gekennzeichnet, dass** der Zwischenbehälter (2) eine Ausstülpung (20) umfasst, die bereitgestellt wird, um auf den Abzug (53) aufgesetzt zu werden.

11. Kochvorrichtung nach einem der Ansprüche 3 bis 10, **dadurch gekennzeichnet, dass** der Deckel (3; 3') einem der Ansprüche 1 oder 2 entspricht.

12. Kochvorrichtung nach einem der Ansprüche 3 bis 11, **dadurch gekennzeichnet, dass** sie Heizmittel (10) umfasst, und dass der Behälter (5) mit den Heizmitteln (10) in Verbindung steht.

13. Elektrogerät zur Speisenzubereitung, umfassend eine Kochvorrichtung nach einem der Ansprüche 3 oder 4, ein drehbares Arbeitsgerät (4), das in dem Behälter (5) angeordnet ist, und eine Vorrichtung (6) zum Antreiben des drehbaren Arbeitsgeräts (4), wobei der Behälter (5) mit Heizmitteln (10) in Verbindung steht, wobei das drehbare Arbeitsgerät (4), das in dem Behälter (5) angeordnet ist, den Nebenkörper (32; 32') in die angehobene Position zurückschiebt, wenn der Deckel (3; 3') auf dem Behälter (5) liegt.

14. Elektrogerät zur Speisenzubereitung nach Anspruch 13, **dadurch gekennzeichnet, dass** wenn das drehbare Arbeitsgerät (4) nicht in dem Behälter (5) vorhanden ist, der Nebenkörper (32; 32') die abgesenkte Position einnimmt, wenn der Deckel (3; 3') auf dem Behälter (5) liegt.

15. Elektrogerät zur Speisenzubereitung nach einem der Ansprüche 13 oder 14, **dadurch gekennzeichnet, dass** der Behälter (5) einen Boden (50) und einen sich vom Boden (50) aus erhebenden Abzug (53) aufweist, und dass das drehbare Arbeitsgerät (4) auf den Abzug (53) gesetzt wird.

16. Elektrogerät zur Speisenzubereitung nach Anspruch 15, **dadurch gekennzeichnet, dass** es einen Zwischenbehälter (2) umfasst, der dazu bereitgestellt wird, um zwischen den Deckel (3; 3') und der Behälter (5) eingesetzt zu werden, und dass der Zwischenbehälter (2) eine Ausstülpung (20) umfasst, die bereitgestellt wird, um auf den Abzug (53) des Behälters (5) aufgesetzt zu werden.
